# EUROPÄISCHE PATENTSCHRIFT

(11) **EP 0 697 926 B1**
(45) Veröffentlichungstag und Bekanntmachung des Hinweises auf die Patenterteilung: **17.04.2002**
(21) Anmeldenummer: 95907540.9
(22) Anmeldetag: 16.02.1995
(51) Int. Cl.: B21D 43/12, B65G 15/44

(54) **VORRICHTUNG ZUM SERIELLEN TRANSPORT VON BLECHTEILEN IN RICHTUNG EINER BEHANDLUNGSSTATION**
SERIAL TRANSPORT DEVICE FOR METAL SHEETS TOWARD A PROCESSING STATION
DISPOSITIF DE TRANSPORT EN SERIE DE TOLES VERS UNE STATION DE TRAITEMENT

(30) Priorität: 07.03.1994 CH 66094
(43) Veröffentlichungstag der Anmeldung: 28.02.1996
(73) Patentinhaber: ELPATRONIC AG, 8962 Bergdietikon (CH)
(72) Erfinder: GYSIN, Hanspeter, CH-8032 Zürich (CH); INEICHEN, Armin, CH-5610 Wohlen (CH); OEHRLI, Hanspeter, CH-8964 Friedlisberg (CH)
(86) Internationale Anmeldenummer: CH9500035
(87) Internationale Veröffentlichungsnummer: WO9524284

(56) Entgegenhaltungen:
- EP-A- 0 335 301
- DE-A- 3 634 712
- US-A- 2 236 747
- US-A- 4 697 693
- PATENT ABSTRACTS OF JAPAN vol. 6, no. 263 (M-181) (1141) 22. Dezember 1982 & JP,A,57 156 915 (HITACHI SEISAKUSHO KK) 28. September 1982

## Beschreibung

Die Erfindung betrifft eine Vorrichtung gemäss dem unabhängigen Patentanspruch zum seriellen Transport von Blechteilen in Richtung einer nachfolgenden Behandlungsstation, wobei die für den Transport notwendige, beschleunigende Kraft an einer in Transportrichtung hinteren Blechkante angreift. Insbesondere betrifft die Erfindung eine Vorrichtung zum Ausstossen von gerundeten Blechteilen aus einer Rundungsstation oder zum Weitertransport der gerundeten Blechteile in Richtung einer Schweissstation, in der die gerundeten Blechteile zu Dosenzargen verschweisst werden. Die Vorrichtung kann aber beispielsweise auch bei der Herstellung von Platinen durch Verschweissen von ebenen Blechteilen zur Anwendung kommen. Die Erfindung betrifft außerdem Verwendungen der Vorrichtung.

Ebene Blechteile werden gemäss dem Stande der Technik für die Herstellung von Platinen, beispielsweise gemäss der europäischen Patentschrift Nr. 0279866, miteinander verschweisst. Weiter werden ebene Blechteile für die Herstellung von Zargen für Blechdosen in einer Rundungsstation, zu der sie im wesentlichen tangential zur zu erstellenden Rundung zugeführt werden, zwischen einem Hohlzylinder und einem Zylinder gerundet und dann in axialer Richtung aus der Rundungsstation ausgestossen. In derselben Richtung werden sie dann weiter gegen eine Schweisstation transportiert, wo die durch den Rundungsvorgang und eine entsprechende Kantenführung einander überlappend positionierten Kanten miteinander verschweisst werden.

Üblicherweise werden zu verschweissende Platinen oder Zargen mit Hilfe von Nocken weiter transportiert; die Zargen werden beispielsweise aus der Rundungsstation ausgestossen, wobei die Nocken an die in Ausstossrichtung hintere, gerundete Kante der Blechteile geführt werden. Eine Mehrzahl derartiger Nocken ist beispielsweise an einer endlosen Kette befestigt, wobei die Kette derart über Antriebs- bzw. Umlenkungsräder geführt und angetrieben ist, dass, sobald ein Blechteil gerundet ist, ein Nocken für die Ausstossung gegen die in Ausstossrichtung hintere, gerundete Blechkante geführt und damit das gerundete Blechteil in axialer Richtung mit einer beschleunigten Bewegung ausgestossen wird.

US -A- 2,236,747 offenbart eine Vorrichtung gemäß Oberbegriff von Anspruch 1 zum Transport von Dosenzargen über einen Kettenförderer, welcher Transportnocken aufweist.

Bei Schweissanlagen gemäss Stand der Technik zum Verschweissen von Dosenzargen bzw Platinen ist der Antrieb der Kette ist dabei derart geregelt, dass jeder Nocken für die Ausstossung von einer Stossgeschwindigkeit auf eine Maximalgeschwindigkeit beschleunigt wird. Die Stossgeschwindigkeit ist limitiert auf den Wert, den die Zargenkante aufgrund der Wucht des Stosses ohne plastische Deformation übersteht. Die Zeit, die für die Ausstossung benötigt wird, ist unter anderem abhängig von der Differenz zwischen Stossgeschwindigkeit und Maximalgeschwindigkeit und von der erzielbaren Beschleunigung.

Nach modernen Schweisstechniken sind bei normalen Zargenhöhen (Länge der Schweissnaht) Taktzahlen von bis zu 1'000 Zargen pro Minute möglich, was Taktzeiten bis hinunter auf 60msec bedeutet. Um derart hohe Taktzahlen wirklich realisieren zu können, muss es auch möglich sein, die Rundung (bei normalen Zargendurchmessem) und die Ausstossung aus der Rundungsstation zusammen in der entsprechenden, sehr kurzen Taktzeit durchzuführen. Um die Taktzeit verkürzen zu können, muss aber entweder die Rundungsgeschwindigkeit erhöht oder die Ausstossung in einer kürzeren Zeit ermöglicht werden.

Die Erfindung stellt sich aus diesem Grunde die Aufgabe, eine Vorrichtung zum Ausstossen von Blechteilen aus einer Behandlungsstation zu schaffen, welche Vorrichtung gegenüber entsprechenden, gemäss dem Stande der Technik eingesetzten Vorrichtungen (üblicherweise Nocken an Transportketten, die über Getriebe angetrieben werden) kürzere Ausstosszeiten ermöglicht, derart, dass auch bei höchstmöglichen Taktzahlen und für Zargen mit relativ grossen Durchmessern genügend Zeit für eine problemlose Rundung bleibt. Über die gestellte Aufgabe hinaus ist die erfindungsgemässe Vorrichtung fähig, einen Stau von Blechteilen schadlos zu überstehen und einen möglichst langen, problemlosen Betrieb (beispielsweise 10⁸ Zargen) zu garantieren. Ferner soll die Vorrichtung einfach an verschiedene Zargenformate (Zargendurchmesser) anpassbar sein. Weiter kann die erfindungsgemässe Vorrichtung im gesamten Transportsystem von Platinen oder Zargen verwendet werden. Insbesondere beim Transport von Zargen bestehen nebst der Ausstossvorrichtung aus dem Rundungsapparat weitere Transportstrecken, über die die Zargen beschleunigt werden müssen und die erfindungsgemässe Vorrichtung vorteilhaft einsetzbar ist.

Diese Aufgabe wird gelöst durch die Vorrichtung, wie sie in den Patentansprüchen definiert ist.

Durch die Erfindung wird die Charakteristik des Stosses eines Ausstossgliedes auf die noch stationäre Zargenkante oder allgemein auf eine mit einer kleineren Geschwindigkeit sich vor dem Ausstossglied bewegende Blechkante verbessert. Anstelle des schlagartigen Auftreffens, bzw. der schlagartigen Beschleunigung durch ein starr an einem Transportmittel fixiertes Ausstossglied tritt ein weiches Auftreffen, bzw. eine verminderte Beschleunigung der Zarge über eine vorbestimmte Zeitspanne ein. Diese Zeitspanne beginnt bei der Berührung des Ausstossgliedes mit der Zarge und endet, sobald das Ausstossglied nach einer Verschiebung gegenüber dem Transportmittel eine Endlage erreicht hat. Die Verschiebung erfolgt gedämpft und wird durch die Trägheit der Zarge verursacht. Die Verschiebung ist selbstrückstellend ausgebildet, so dass sich das Ausstossglied für den Anschlag an die nächste Blechkante wieder in seiner Ausgangslage, d.h. in korrekter Lage befindet.

Damit wird ermöglicht, die Relativgeschwindigkeit zwischen dem Ausstossglied und der anzustossenden Blechkante vor dem Stoss auf ein Mass zu erhöhen, welches bei unbeweglich am Transportmittel fixiertem Ausstossglied eine Beschädigung der Zarge oder Platine zur Folge hätte. Durch die erhöhte Anfangsbeschleunigung der Zarge lässt sich diese schneller aus dem Rundapparat entfernen. Zudem verringert sich die noch notwendige Restbeschleunigung für die Maximaigeschwindigkeit gemäss dem Stande der Technik, was die Anforderungen an den Antrieb des Transportmittels senkt. Alternativ kann eine höhere Maximalgeschwindigkeit realisiert werden.

Anhand der folgenden Figuren soll nun die Erfindung detailliert beschrieben werden. Dabei zeigen:
- **Figur 1**: beispielhafte Bewegungsprofile für ein Ausstossglied während einer Taktzeit T;
- **Figur 2**: Stosscharakteristik für einen Stoss zwischen einem gedämpft verschieb- oder verschwenkbaren Ausstossnocken und einer anfänglich stationären Blechkante;
- **Figur 3**: das Prinzip des gedämpft verschieb- oder verschwenkbaren Ausstossnockens an drei schematisch dargestellten, beispielhaften Ausführungsformen;
- **Figur 4**: eine beispielhafte Ausführungsform der erfindungsgemässen Ausstossvorrichtung als Ansicht quer zur Ausstossrichtung;
- **Figur 5**: die Ausführungsform gemäss Figur 4 als Ansicht in Ausstossrichtung;
- **Figur 6**: ein Ausstossnocken für die Vorrichtung gemäss Figuren 4 und 5;
- **Figuren 7 und 8 (jeweils a und b)**: zwei Ausführungsformen für Befestigungen von Ausstossnocken an einem Zahnriemen mit Blickrichtung parallel zur Ausstossrichtung (Figuren 7a und 8a) und quer zur Ausstossrichtung (Figuren 7b und 8b).

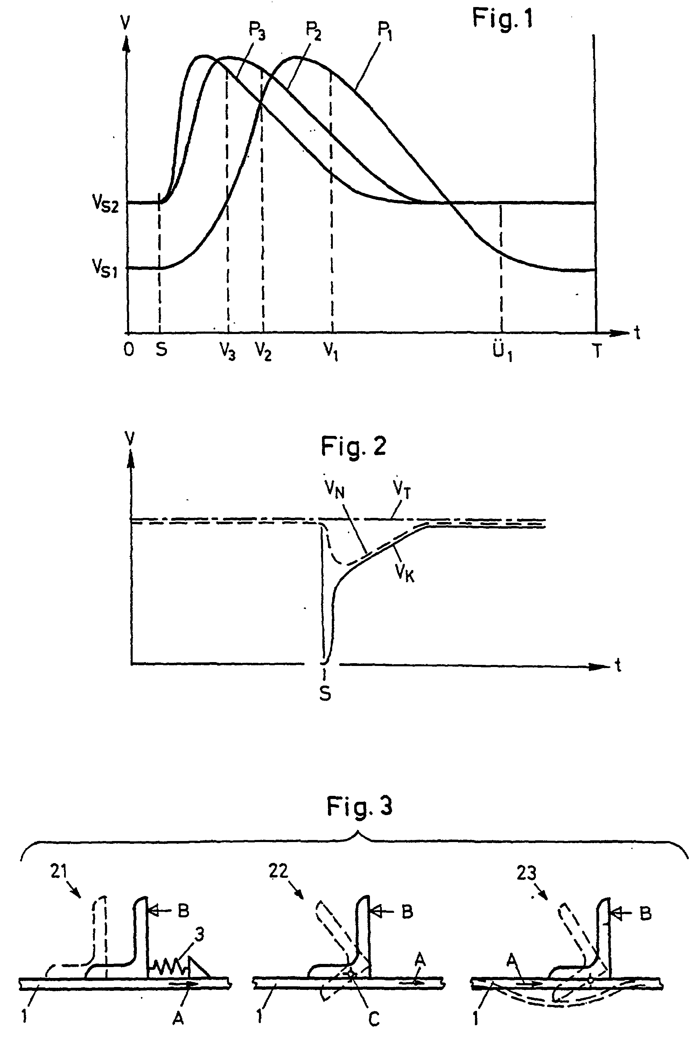

**Figur 1** zeigt beispielhafte Bewegungsprofile (P₁, P₂, P₃) für Ausstossglieder (allgemein: Transportglieder) während einer beispielsweise vorgegebenen Taktzeit T. Es handelt sich um eine Darstellung, in der die Geschwindigkeit v des Ausstossgliedes als Funktion der Zeit aufgetragen ist in einem Zeitintervall (Taktzeit T) zwischen einer Zeit 0 (Ende des Rundungsvorganges) und der Zeit T (Ende des nächsten Rundungsvorganges). Der Rundungsvorgang eines Blechteiles läuft ab zwischen dem Verlassen der Rundungsstation durch den vorlaufenden Blechteil (Zeitpunkt V) und dem Ende der Taktzeit (Zeitpunkt T). Der beschleunigte Ausstossvorgang schliesst unmittelbar an den Stoss (Zeitpunkt S) an und dauert bis zur Übergabe (Zeitpunkt Ü) des gerundeten Blechteils an ein folgendes Transportmittel oder in eine folgende Behandlungsstation, welcher Zeitpunkt Ü zwischen Zeitpunkt V und dem Ende der Taktzeit (Zeitpunkt T) liegt Während dem Rundungsvorgang eines Blechteiles wird also der vorlaufende Blechteil, der unmittelbar vor dem Beginn dieses Rundungsvorganges die Rundungsstation verlassen hat, von der Rundungsstation weggefördert und gleichzeitig wird das Ausstossglied, bzw. das Transportmittel, auf dem das Ausstossglied angebracht ist, auf die Stossgeschwindigkeit abgebremst. Zwischen dem Ende des Rundungsvorganges (Zeitpunkt T bzw. 0) und dem Stoss durch das Ausstossglied auf die Blechkante (Zeitpunkt S) ist vorteilhafterweise ein kurzes Sicherheitsintervall (Zeitpunkt = bis Zeitpunkt S) vorzusehen. Je weniger Zeit in dem vorgegebenen Intervall nun für die Ausstossung (Zeitpunkt S bis Zeitpunkt V) notwendig ist, desto mehr Zeit steht für die Rundung der nachfolgenden Zarge (Zeitpunkt V bis Zeitpunkt T) zur Verfügung oder desto kürzer kann das Zeitintervall bei gegebener Rundungszeit angesetzt werden.

Durch die Figur 1 wird illustriert, wie gegenüber einem ersten Geschwindigkeitsprofil P₁ durch Erhöhung der Stossgeschwindigkeit von v_{S1} auf v_{S2} der Zeitpunkt des Verlassens der Rundungsstation von einem Zeitpunkt V₁ auf einen früheren Zeitpunkt V₂ verschoben werden kann, sodass bei gleicher Taktzeit mehr Zeit für die Rundung (V₂ bis T) verwendet oder die Taktzeit entsprechend verkürzt werden kann. Das Profil P₃ zeigt gegenüber dem Profil P₂, wie durch Erhöhung der Beschleunigung (Steigung der Geschwindigkeitskurve) der Zeitpunkt für das Verlassen der Rundungsstation (V₃) weiter verschoben werden kann.

Während ein weiteres Blechteil gerundet wird, wird das vorlaufende Blechteil von der Rundungsstation weg weiterbefördert und übergeben und das Transportmittel wieder auf die Stossgeschwindigkeit gebremst. Das Bremsprofil ist nicht relevant, solange für den Zeitpunkt S des Stosses die Stossgeschwindigkeit (v_{S1}, v_{S2}) wieder erreicht wird.

Figur 1 illustriert also eigentlich den Lösungsweg der erfindungsgemäss für die gestellte Aufgabe eingeschlagen wird. Gegenüber dem Stande der Technik (P₁) wird durch Änderung der Stosscharakteristik eine Erhöhung der Stossgeschwindigkeit ermöglicht (P₂), was zu einer Verkürzung der für die Ausstossung notwendigen Zeit führt. Zusätzlich kann durch Verringerung der bewegten Massen und/oder Verwendung eines entsprechenden Antriebes die Beschleunigung nach dem Stoss erhöht werden (P₃), was zu einer weiteren Verkürzung der Ausstosszeit führt.

Für andere Anwendungen, insbesondere für den Transport von bereits sich bewegenden Blechteilen, ist die Figur 1 entsprechend anzuwenden.

Als Antrieb des Transportmittels, das die Ausstossglieder bewegt, kann ein Motor mit konstanter Drehzahl und ein Getriebe, das das vorgegebene Geschwindigkeitsprofil erzeugt, eingesetzt werden. Eine derartige Anordnung ist aufwendig aber auch für sehr hohe Beschleunigungen notwendige, und für die Anwendung geeignete Motoren sind auf dem Markte erhältlich. Weniger aufwendig sind geregelte Servomotoren, deren Drehzahlen entsprechend einem vorgegebenen Geschwindigkeitsprofil elektronisch regelbar sind. Derartige Motoren sind aber nur für beschränkte Leistungen erhältlich, sodass zur Erreichung der für die vorliegende Anwendung geforderten Beschleunigungen (bis ca. 80 g) die Massen des Transportmittels und/oder der Ausstossglieder sehr gering gehalten werden müssen.

**Figur 2** zeigt schematisch einen Stossverlauf zwischen einem gedämpft verschieb- oder verschwenkbaren Ausstossglied und einer anfänglich stationären Blechkante. Dabei sind die Geschwindigkeiten des Transportmittels (v_{T}), des Ausstossnockens (v_{N}) und der Blechkante (v_{K}) als Funktion der Zeit t aufgezeichnet. Das Transportmittel, auf dem das Ausstossglied angebracht ist, bewegt sich beispielsweise mit konstanter Geschwindigkeit (v_{T}) durch die Stossstelle. Beim Stoss (Zeitpunkt S) auf die stationäre Blechkante wird das Ausstossglied relativ zum Transportmittel gegen die Ausstossrichtung verschoben oder verschwenkt, was ihn verzögert (v_{N}), während die Blechkante gleichzeitig stark beschleunigt wird, bis sie die Geschwindigkeit des Ausstossgliedes erreicht hat. Die Dämpfung des Ausstossgliedes wird beispielsweise durch eine Federung realisiert, wobei die Federkraft das Ausstossglied nach dem Stoss auch wieder in seine ursprüngliche Lage zurückbewegt. Je weicher die Federung des Ausstossgliedes und je weiter seine Verschiebbarkeit gegenüber dem Transportmittel ist, desto steiler und stärker wird das Ausstossglied verzögert und desto weniger muss die Blechkante beschleunigt werden, bis sie die gleiche Geschwindigkeit hat wie das Ausstossglied; das heisst aber auch, desto kleinere Kräfte wirken auf sie. Mit anderen Worten: je höher die Stossgeschwindigkeit sein soll, desto weicher muss eine Federung des Ausstossgliedes ausgelegt werden.

Wird das Ausstossglied nicht durch die Kraft einer entsprechenden Feder in seine Ausgangslage zurückgetrieben, müssen Mittel vorgesehen werden, um das Ausstossglied vor dem nächsten Stoss und vorteilhafterweise nach der Übergabe des Blechteiles in seine ursprüngliche Lage zurück zu setzen. Solche Mittel können beispielsweise entsprechende Kulissen sein, die im Bereiche des Retourtrums des Transportmittels angeordnet sind.

**Figur 3** zeigt an drei beispielhaften Ausführungsformen das Prinzip des gedämpft verschieb- oder verschwenkbaren Ausstossgliedes in Form eines Ausstossnockens. Das Transportmittel 1 ist in Ausstossrichtung A angetrieben. Der Ausstossnocken ist, wie am Nocken 21 gezeigt, durch eine Kraft B gegen die Ausstossrichtung A aus seiner Ruhestellung (ausgezogen) in eine verschobene Stellung (gestrichelt) durch die Feder 3 gedämpft verschiebbar angeordnet. Die Feder 3 treibt den Nocken nach Wegfallen der Kraft B in seine Ruhestellung zurück. Der Nocken kann aber auch, wie am Beispiel des Nokkens 22 gezeigt, durch die Kraft B um eine Schwenkachse C, die quer zur Ausstossrichtung angeordnet ist, aus der Ruheposition (ausgezogen) in eine verschwenkte Position (gestrichelt) gebracht werden, wobei wiederum beispielsweise elastisch deformierbare Mittel (nicht dargestellt) vorgesehen sind, um den Nocken in die Ruheposition zurückzutreiben. Dieses Mittel zur Rücktreibung des Nockens in die Ruheposition kann beispielsweise das Transportmittel selbst sein, wie das für den Nocken 23 dargestellt ist. Das Transportmittel ist hier ein elastischer Riemen, beispielsweise ein Zahnriemen, der quer zur Ausstossrichtung nicht oder nur einseitig geführt ist, sodass er durch eine Verschwenkung des Nockens durch die Kraft B in der gestrichelt dargestellten Art elastisch deformiert wird. Die Elastizität des Riemens wird in diesem Falle als rücktreibende Kraft ausgenützt, wobei über die Riemenspannung die rücktreibende Federkraft einstellbar ist.

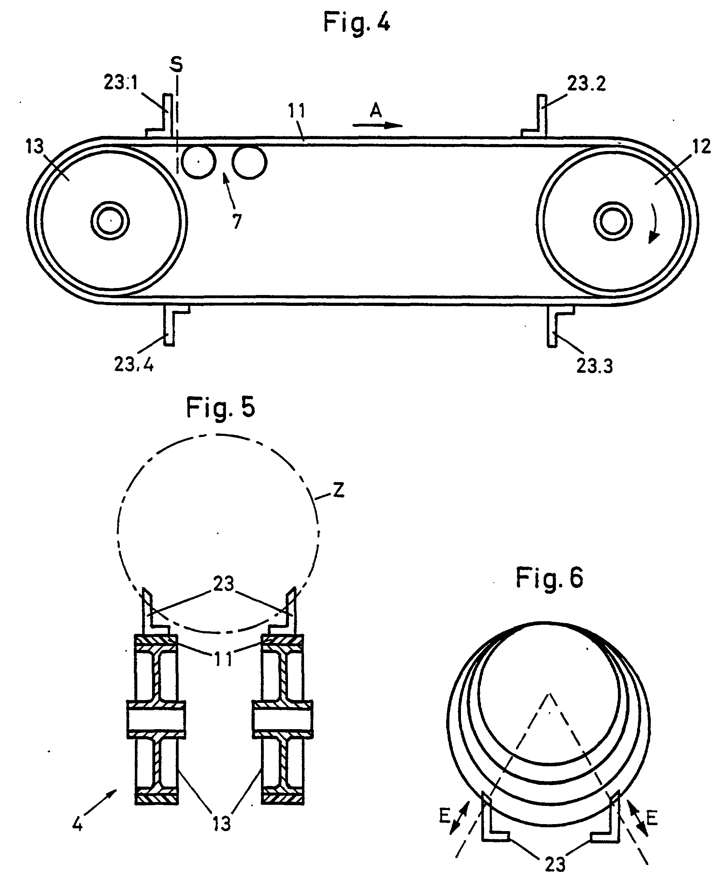

**Figur 4** zeigt eine beispielhafte Ausführungsform der erfindungsgemässen Vorrichtung. Das Transportmittel ist ein Zahnriemen 11, der über ein Antriebsrad 12 und ein Umlenkund Spannrad 13 geführt und angetrieben ist. Es handelt sich um einen handelsüblichen Zahnriemen, der an irgend einer Stelle (nicht dargestellt) beispielsweise durch Kugellager seitlich geführt ist. Das Antriebsrad ist mit einem elektronisch gesteuerten Antriebsmotor wirkverbunden. Selbstverständlich kann das getaktete Geschwindigkeitsprofil auch über ein entsprechendes Getriebe realisiert werden. Das Spannrad ist parallel zur Ausstossrichtung A verschiebbar angeordnet, sodass über die Position des Spannrades die Riemenspannung einstellbar ist. Auf dem Riemen sind in gleichen Abständen voneinander beispielsweise vier Ausstossnocken 23.1/2/3/4 angeordnet, wobei der Abstand zwischen den Ausstossnocken grösser sein muss als die grösste zu verarbeitende Zargenhöhe. Die Stossstelle S befindet sich am Anfang der Ausstossstrecke.

Im Bereiche der Stossstelle ist der Riemen mindestens in einer Richtung quer zur Ausstossrichtung ungeführt, das heisst der Ausstossnocken kann beim Stoss, in der für den Nocken 23 (Figur 3) dargestellten Art verschwenkt werden, wobei der Riemen lokal aus der Ausstossrichtung ausgelenkt wird und durch seine Elastizität selbst als rücktreibende Feder wirkt. Ist der Riemen im Bereiche der Stossstelle S beispielsweise, wie schematisch durch das Führungsrollenpaar 7 dargestellt, in einer Richtung quer zur Ausstossrichtung A geführt, wird der Riemen nur in der entgegengesetzten Richtung aus der Ausstossrichtung ausgelenkt. Entfernt von der Stossstelle kann der Riemen beliebig geführt oder ungeführt sein.

Der Zahnriemen hat als zusätzlichen Vorteil gegenüber der Transportkette eine bedeutend kleinere Masse, die für das Geschwindigkeitsprofil getaktet beschleunigt und wieder abgebremst werden muss. Dadurch kann bei gleicher Antriebskraft, wie bereits eingangs erwähnt, eine höhere Nockenbeschleunigung und dadurch eine kürzere Ausstosszeit erreicht werden. Zusätzlich weist er eine bessere Dämpfung auf.

Es zeigt sich auch, dass mit einer Vorrichtung nach Figur 4 die Stossgeschwindigkeit gegenüber einer Vorrichtung mit starr auf einer Transportkette montierten Ausstossnocken verdoppelt werden kann (beispielsweise von 1m/sec auf 2m/sec). Auch bei einer derart erhöhten Stossgeschwindigkeit läuft die Vorrichtung zudem ruhiger. Auch das Verhalten bei einem Blechstau wird durch die Elastizität des Riemens verbessert. Ein handelsüblicher Zahnriemen reisst bei einem Stau nicht, bis der Antriebsmotor wegen Überlast ausschaltet. Als weiteren Vorteil ist der Zahnriemen gegenüber einer Transportkette ein elektrischer Isolator, wodurch die Gefahr der Funkenerosion der Nocken ausgeschaltet oder mindestens vermindert wird.

**Figur 5** zeigt die Ausstossvorrichtung gemäss Figur 4 als Ansicht in Ausstossrichtung. Die Vorrichtung besteht aus einem Paar von Teilvorrichtungen 4 und 5, die parallel zueinander angeordnet sind, derart, dass eine auszustossende Zarge Z durch zwei Nocken 23 angestossen und beschleunigt wird. Diese Anordnung erweist sich insbesondere dann als vorteilhaft, wenn beide Teilvorrichtungen mit einem separaten Antriebsmotor wirkverbunden sind, wobei die beiden Antriebe durch elektronische Mittel synchronisiert werden. Es ist aber auch ein Antrieb mit nur einem Motor denkbar.

Ein weiterer Vorteil der Anordnung von zwei parallelen Teilvorrichtungen 4 und 5 gemäss Figur 5 zeigt sich auch in **Figur 6.** Zur Einstellung der Ausstossvorrichtung auf verschiedene Zargendurchmesser sind die beiden Teilvorrichtungen bzw. die Ausstossnocken auf den durch die gestrichelten Linien dargestellten Ebenen parallel zueinander verschiebbar (Pfeile E) angeordnet. Vorzugsweise beträgt der Winkel zwischen den gestrichelten Linien 0 bis 90 . Sind die beiden Teilvorrichtungen auch antriebsmässig voneinander unabhängig, wird eine derartige Einstellung sehr einfach.

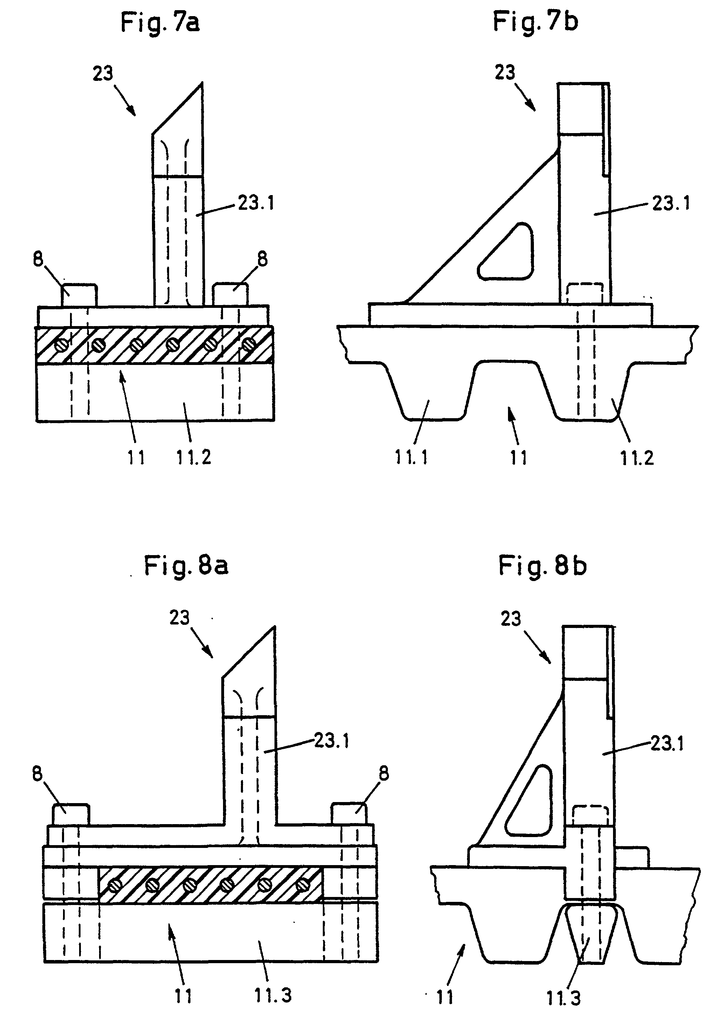

**Figuren 7 und 8 (jeweils a und b)** zeigen noch beispielsweise Befestigungen von Ausstossnocken 23 an Zahnriemen 11 und zwar mit Blickrichtung parallel zur Ausstossrichtung (Figuren 7a und 8a) und Blickrichtung quer zur Ausstossrichtung (Figuren 7b und 8b). Der Ausstossnocken 23 kann beispielsweise mit einem Befestigungszahn 11.2, der einen Zahn des Zahnriemens 11 ersetzt (Figuren 7a und 7b), oder mit einem Zusatzzahn 11.3 zwischen zwei Zähnen 11.1 des Zahnriemens 11 (Figuren 8a und 8b) an diesem befestigt sein. Damit der Riemen 11 problemlos umgelenkt werden kann, ist es in beiden Fällen wichtig, die Ausdehnung der Befestigung in Ausstossrichtung so klein wie möglich zu halten. Aus diesem Grunde werden in beiden Ausführungsformen der Ersatz- (11.2) oder Zusatzzahn (11.3), die vorteilhafterweise aus Stahl bestehen, und der Ausstossnocken durch zwei auf einer Linie senkrecht zur Längsausdehnung des Riemens angeordneten Befestigungsmitteln, beispielsweise Schrauben 8, miteinander verbunden.

Die Ausführungsform mit dem Zusatzzahn 11.3 (Figuren 8a und 8b) bedingt, dass die gezähnten Antriebs- und Umlenkungsräder für den Zahnriemen derart ausgelegt sind, dass der Zusatzzahn immer mit derselben Stelle (oder Stellen) des Rades in Eingriff kommt und dass an dieser Stelle (oder Stellen) je ein Zahn fehlt.

Die in den Figuren 7 und 8 dargestellten Ausstossnocken bestehen wegen des kleinen Gewichtes vorteilhafterweise aus Aluminium und weisen an der Stossstelle ein kleines Hartmetallplättchen auf. Sie können auch aus Stahl oder einem Verbundwekstoff gefertigt sein.

## Patentansprüche

1. Vorrichtung zum seriellen Transport von Blechteilen in Richtung einer nachfolgenden Behandlungsstation, welche Vorrichtung ein mit einem getakteten Geschwindigkeitsprofil angetriebenes Transportmittel (1) und mindestens ein am Transportmittel angeordnetes Transportglied aufweist, welches zur Beschleunigung und Förderung der Blechteile mit diesen mechanisch zusammenwirkt, dass **durch gekennzeichnet,** dass das mindestens eine Transportglied in der Phase des Zusammenwirkens mit dem erfassten Blechteils aus in einer der Transportrichtung entgegengesetzten Richtung gegenüber dem Transportmittel (1) unter Energieaufnahme gedämpft und in seine Ausgangslage selbstrückstellend verschieb- oder verschwenkbar angeordnet ist.

2. Vorrichtung nach Anspruch 1, **dadurch gekennzeichnet, dass** das mindestens eine Transportglied ein Ausstossnocken (21, 22, 23) ist, der gegenüber dem Transportmittel (1) durch eine Federkraft gedämpft verschieb- und/oder verschwenkbar angeordnet ist.

3. Vorrichtung nach Anspruch 1 oder 2, **dadurch gekennzeichnet, dass** das Transportmittel ein in Längsrichtung elastisch wenigstens beschränkt deformierbarer Riemen (11) ist, der mittels Antriebs- (12) und Umlenkräder (13) mindestens teilweise parallel zur Transportrichtung geführt und angetrieben ist und dass das mindestens eine Transportglied (23) fest an diesem Riemen befestigt ist.

4. Vorrichtung nach Anspruch 3, **dadurch gekennzeichnet, dass** der mindestens eine Ausstossnocken mit Befestigungsmitteln (8) am Riemen befestigt ist, welche Befestigungsmittel entlang einer Linie quer zur Riemenlängsachse angeordnet sind.

5. Vorrichtung nach Anspruch 3 oder 4, **dadurch gekennzeichnet, dass** sie eine einstellbare Spannvorrichtung aufweist, mit der der Riemen auf eine vorgegebene Spannung spannbar ist.

6. Vorrichtung nach einem der Ansprüche 3 bis 5, **dadurch gekennzeichnet, dass** der Riemen (11) ein Zahnriemen ist, dass der mindestens eine Ausstossnocken (23) mit Hilfe eines Zusatzzahnes (11.3) zwischen zwei Zähnen (11.1) des Zahnriemens befestigt ist und dass die gezähnten Antriebs- bzw. Umlenkräder derart dimensioniert sind, dass der Zusatzahn (11.3) immer mit derselben Stelle oder denselben Stellen der Räder in Eingriff kommt und dass an dieser Stelle oder diesen Stellen ein Radzahn fehlt.

7. Vorrichtung nach einem der Ansprüche 3 bis 5, **dadurch gekennzeichnet, dass** der Riemen (11) ein Zahnriemen ist und dass der mindestens eine Ausstossnokken (23) mit Hilfe eines Ersatzzahnes (11.2) daran befestigt ist.

8. Vorrichtung nach Anspruch 1 oder 2, **dadurch gekennzeichnet, dass** das Transportmittel (1) eine durch Antriebs- bzw. Umlenkräder geführte und angetriebene, endlose Kette ist und dass das mindestens eine Transportglied (21, 23) um eine quer zur Transportrichtung (A) angeordnete Schwenkachse gedämpft verschwenkbar oder gegen die Transportrichtung (A) gedämpft verschiebbar an einem Kettenglied angeordnet ist.

9. Vorrichtung nach Anspruch 1, **dadurch gekennzeichnet, dass** das mindestens eine Transportglied um eine quer zur Transportrichtung angeordnete Schwenkachse gedämpft verschwenkbar oder gegen die Transportrichtung gedämpft verschiebbar ist und dass Rückstellmittel vorgesehen sind, mit denen das Transportglied aus seiner verschwenkten oder verschobenen Stellung zurückstellbar ist.

10. Vorrichtung nach einem der Ansprüche 1 bis 9, **dadurch gekennzeichnet, dass** das Transportmittel (1, 11) mit einem elektronisch gesteuerten Antriebsmotor wirkverbunden ist.

11. Vorrichtung nach einem der Ansprüche 1 bis 10, **dadurch gekennzeichnet, dass** zwei parallel zueinander angeordnete Teilvorrichtungen (4 und 5) mit synchron antreibbaren Transportmitteln (11) vorgesehen sind.

12. Vorrichtung nach Anspruch 11, **dadurch gekennzeichnet, dass** jedes Transportmittel der beiden Teilvorrichtungen (4 und 5) je mit einem Antriebsmotor wirkverbunden ist und dass elektronische Mittel zur Synchronisation der beiden Motoren vorgesehen sind.

13. Vorrichtung nach Anspruch 11 oder 12, **dadurch gekennzeichnet, dass** die beiden Teilvorrichtungen (4 und 5) für eine Einstellung für verschiedene Zargendurchmesser auf zwei winklig zueinander stehenden Ebenen parallel zueinander verschiebbar angeordnet sind, wobei der Winkel zwischen den beiden Ebenen 0 bis 90 beträgt.

14. Anwendung der erfindungsgemässen Vorrichtung nach einem der Ansprüche 1 bis 13 in einer Anordnung zur Herstellung von Dosenzargen für das Ausstossen von gerundeten Blechteilen aus einer Rundungsstation in Richtung einer Schweissstation.

15. Anwendung der erfindungsgemässen Vorrichtung gemäss einem der Ansprüche 1 bis 13 in einer Anordnung zur Herstellung von Dosenzargen für den Transport von gerundeten Blechteilen gegen eine Schweissstation.

16. Anwendung der erfindungsgemässen Vorrichtung gemäss einem der Ansprüche 1 bis 13 in einer Anordnung zur Herstellung von geschweissten Platinen für den Transport von ebenen Blechteilen gegen eine Schweissstation.

## Claims

1. Device for serial transport of sheet-metal blanks towards a subsequent processing station, which device has a transport means (1) driven with a synchronized velocity profile and at least one transport element arranged on the transport means which co-operates mechanically with the sheet-metal blanks to accelerate and convey them, that in **characterized that** the at least one transport element is arranged so as to be capable of a damped shifting or rocking action with respect to the transport means (1), with absorption of energy, in the opposite direction to the transport direction during the phase of co-operation with the sheet-metal blank, followed by automatic return to its initial position.

2. Device according to Claim 1, **characterized in that** the at least one transport element is an ejector dog (21, 22, 23) arranged so as to be capable of a shifting and/or rocking action, damped by spring force, with respect to the transport means (1).

3. Device according to Claim 1 or 2, **characterized in that** the transport means is a belt (11) which is to at least a limited degree elastically deformabie in the longitudinal direction and which is guided and driven at least partially parallel with the transport direction by means of a driving pulley (12) and return pulley (13) and **in that** the at least one transport element (23) is fixed to this belt.

4. Device according to Claim 3, **characterized in that** the at least one ejector dog is attached to the belt with fasteners (8) which are located on a line at right angles to the longitudinal axis of the belt.

5. Device according to Claim 3 or 4, **characterized in that** it has an adjustable tensioning device for setting the belt to a specified tension.

6. Device according to any one of Claims 3 to 5, **characterized in that** the belt (11) is a toothed belt, **in that** the at least one ejector dog (23) is attached by an extra tooth (11.3) between two teeth (11.1) of the toothed belt and **in that** the toothed driving and return pulleys are dimensioned so that the extra tooth (11.3) always engages with the pulleys at the same point or points and that a tooth of the pulley is absent at that point, or at each of those points.

7. Device according to any one of Claims 3 to 5, **characterized in that** the belt (11) is a toothed belt and **in that** the at least one ejector dog (23) is attached to it by a dummy tooth (11.2).

8. Device according to Claim 1 or 2, **characterized in that** the transport means (1) is an endless chain guided and driven by driving and return sprockets and **in that** the at least one transport element (21, 23) is arranged on a link of the chain so as to be capable of a damped rocking action about an axis at right angles to the transport direction (A) or a damped shifting action in the opposite direction to the transport direction (A).

9. Device according to Claim 1, **characterized in that** the at least one transport element is capable of a damped rocking action about an axis at right angles to the transport direction, or a damped shifting action in the opposite direction to the transport direction, and **in that** restoring means are provided for resetting the transport element from the tilted or shifted position.

10. Device according to any one of Claims 1 to 9, **characterized in that** the transport means (1, 11) is coupled to an electronically controlled drive motor.

11. Device according to any one of Claims 1 to 10, **characterized in that** two parallel part-devices (4 and 5) with synchronously drivable transport means (11) are provided.

12. Device according to Claim 11, **characterized in that** the transport means of the two part-devices (4 and 5) are each coupled to a drive motor and **in that** electronic means are provided for synchronizing the two motors.

13. Device according to Claim 11 or 12, **characterized in that** for adjustment to different can body diameters the two part-devices (4 and 5) are arranged so as to be displaceable parallel with one another in two planes that are at an angle to one another, the angle between the two planes being 0 to 90.

14. Use of the device according to the invention according to any one of Claims 1 to 13 in an arrangement for the manufacture of can bodies for ejecting rounded sheet-metal blanks from a rounding station towards a welding station.

15. Use of the device according to the invention according to any one of Claims 1 to 13 in an arrangement for the manufacture of can bodies for transporting rounded sheet-metal blanks towards a welding station.

16. Use of the device according to the invention according to any one of Claims 1 to 13 in an arrangement for the manufacture of welded compound panels for transporting flat sheet-metal blanks towards a welding station.

## Revendications

1. Dispositif de transport en série de tôles en direction d'un poste de traitement suivant, lequel dispositif comporte un moyen de transport (1) entraîné suivant un profil de vitesse cadencé et au moins un organe de transport, disposé sur le moyen de transport, lequel coopère mécaniquement avec les tôles pour leur accélération et leur mouvement, **caractérisé en ce que** le au moins un organe de transport en phase de coopération avec la tôle saisie est disposé de manière à pouvoir coulisser ou pivoter par rapport au moyen de transport (1) dans un sens opposé au sens de transport, avec auto-rappel dans sa position initiale, et de manière amortie avec absorption d'énergie .

2. Dispositif selon la revendication 1, **caractérisé en ce que** le au moins un organe de transport est une came d'éjection (21, 22, 23) qui est disposée de manière à pouvoir coulisser et/ou pivoter par rapport au moyen de transport (1), de manière amortie par une force à ressort.

3. Dispositif selon la revendication 1 ou 2, **caractérisé en ce que** le moyen de transport est une courroie (11) déformable élastiquemént, au moins de manière limitée, dans la direction longitudinale, laquelle courroie est guidée et entraînée au moins en partie parallèlement à la direction de transport, au moyen de roues d'entraînement (12) et de roues de renvoi (13), et **en ce que** le au moins un organe de transport (23) est fixé solidairement à cette courroie.

4. Dispositif selon la revendication 3, **caractérisé en ce que** la au moins une came d'éjection est fixée à la courroie par des moyens de fixation (8) qui sont disposés le long d'une ligne transversale à l'axe longitudinal de la courroie.

5. Dispositif selon la revendication 3 ou 4, **caractérisé en ce qu'**il comporte un dispositif de tension réglable au moyen duquel la courroie peut être tendue à une tension prédéterminée.

6. Dispositif selon l'une des revendications 3 à 5, **caractérisé en ce que** la courroie (11) est une courroie crantée, **en ce que** la au moins une came d'éjection (23) est fixée, à l'aide d'une dent supplémentaire (11.3), entre deux dents (11.1) de la courroie crantée, et **en ce que** les roues d'entraînement dentées, respectivement les roues de renvoi dentées sont dimensionnées de manière que la dent supplémentaire (11.3) vient toujours en prise avec le même emplacement ou les mêmes emplacements des roues, et **en ce qu'**à cet emplacement ou à ces emplacements, il manque une dent de roue.

7. Dispositif selon l'une des revendications 3 à 5, **caractérisé en ce que** la courroie (11) est une courroie crantée, et **en ce que** la au moins une came d'éjection (23) est fixée à celle-ci à l'aide d'une dent de remplacement (11.2).

8. Dispositif selon la revendication 1 ou 2, **caractérisé en ce que** le moyen de transport (1) est une chaîne sans fin guidée et entraînée par des roues d'entraînement respectivement des roues de renvoi, et **en ce que** le au moins un organe de transport (21, 23) peut pivoter, de manière amortie, autour d'un axe de pivotement disposé transversalement à la direction de transport (A), ou de manière à pouvoir coulisser sur un maillon de chaîne, de manière amortie, dans le sens contraire au sens de transport (A).

9. Dispositif selon la revendication 1, **caractérisé en ce que** le au moins un organe de transport peut pivoter de manière amortie autour d'un axe de pivotement disposé transversalement à la direction de transport, ou peuvent coulisser de manière amortie dans le sens contraire au sens de transport, et **en ce que** sont prévus des moyens de rappel au moyen desquels l'organe de transport peut être rappelé depuis sa position pivotée ou coulissée.

10. Dispositif selon l'une des revendications 1 à 9, **caractérisé en ce que** le moyen de transport (1, 11) est relié activement à un moteur d'entraînement commandé électroniquement.

11. Dispositif selon l'une des revendications 1 à 10, **caractérisé en ce que** sont prévus deux dispositifs partiels (4 et 5), disposés parallèlement entre eux, avec des moyens de transport (11) qui peuvent être entraînés de manière synchrone.

12. Dispositif selon la revendication 11, **caractérisé en ce que** chaque moyen de transport des deux dispositifs partiels (4 et 5) est relié activement à un moteur d'entraînement, et **en ce que** sont prévus des moyens électroniques pour la synchronisation des deux moteurs.

13. Dispositif selon la revendication il ou 12, **caractérisé en ce que** les deux dispositifs partiels (4 et 5) sont disposés de manière à pouvoir coulisser parallèlement entre eux, sur deux plans en angle l'un par rapport à l'autre, pour un réglage sur différents diamètres de corps de boîte, l'angle entre les deux plans étant de 0 à 90.

14. Utilisation du dispositif suivant l'invention selon l'une des revendications 1 à 13 dans un équipement de fabrication de corps de boîte pour l'éjection de tôles arrondies d'un poste d'arrondissage en direction d'un poste de soudage.

15. Utilisation du dispositif suivant l'invention selon l'une des revendications 1 à 13 dans un équipement de fabrication de corps de boîte pour le transport de tôles arrondies vers un poste de soudage.

16. Utilisation du dispositif suivant l'invention selon l'une des revendications 1 à 13 dans un équipement de fabrication de platines soudées pour le transport de tôles planes vers un poste de soudage.
